(19) **Europäisches Patentamt**
European Patent Office
Office européen des brevets

(11) **EP 1 127 601 B1**

(12) **EUROPÄISCHE PATENTSCHRIFT**

(45) Veröffentlichungstag und Bekanntmachung des Hinweises auf die Patenterteilung:
**13.06.2007 Patentblatt 2007/24**

(51) Int Cl.:
**B01D 3/14** *(2006.01)*

(21) Anmeldenummer: **01103686.0**

(22) Anmeldetag: **23.02.2001**

(54) **Trennwandkolonne zur Auftrennung eines Vielstoffgemisches**

Rectification column for the separation of a multi-substance mixture

Colonne de rectification pour la séparation d'un mélange de substances multiples

(84) Benannte Vertragsstaaten:
**AT BE CH CY DE DK ES FI FR GB GR IE IT LI LU MC NL PT SE TR**

(30) Priorität: **24.02.2000 DE 10008634**

(43) Veröffentlichungstag der Anmeldung:
**29.08.2001 Patentblatt 2001/35**

(73) Patentinhaber: **BASF Aktiengesellschaft**
**67056 Ludwigshafen (DE)**

(72) Erfinder:
• **Burst, Wolfram**
**68199 Mannheim (DE)**

• **Hartmann, Horst**
**67459 Böhl-Iggelheim (DE)**
• **Kaibel, Gerd, Dr.**
**68623 Lampertheim (DE)**
• **Harms, Guido, Dr.**
**67117 Limburgerhof (DE)**

(74) Vertreter: **Isenbruck, Günter et al**
**Isenbruck, Bösl, Hörschler, Wichmann, Huhn Patentanwälte**
**Theodor-Heuss-Anlage 12**
**68165 Mannheim (DE)**

(56) Entgegenhaltungen:
**EP-A- 0 122 367        EP-A- 0 133 510**
**EP-A- 0 823 604**

## Beschreibung

Die Erfindung betrifft eine Trennwandkolonne zur Auftrennung eines Vielstoffgemischs und ein Verfahren zur destillativen Reingewinnung von p-Methoxyzimtsäureethylhexylester.

Bei der Auftrennung von Zulaufgemischen in mehr als zwei hochreine Fraktionen - zum Beispiel in Leichtsieder, Mittelsieder und Hochsieder — müssen normalerweise mehrere Destillationskolonnen eingesetzt werden. Um den apparativen Aufwand zu begrenzen, setzt man bei der Auftrennung von Vielstoffgemischen, die aus mehr als zwei Komponenten bestehen, Kolonnen ein, die sich für die Seitenentnahme flüssiger und gasförmiger Medien eignen. Die Anwendungsmöglichkeit von Destillationskolonnen mit Seitenabzügen ist jedoch dadurch stark eingeschränkt, daß die an den Seitenabzugsstellen entnommenen Produkte normalerweise nicht völlig rein sind. Bei Seitenentnahmen im Verstärkungsteil einer Destillationsvorrichtung, die üblicherweise in flüssiger Form erfolgen, enthalten die Seitenprodukte noch Anteile an leichtsiedenden Komponenten, die im Normalfall über Kopf abgetrennt werden. Entsprechendes gilt für Seitenentnahmen im Abtriebsteil, die meist dampfförmig erfolgen und bei denen entnommene Seitenprodukte noch Anteile des Hochsieders aufweisen. Bei der Verwendung solcher konventioneller Seitenabzugskolonnen werden praktisch immer verunreinigte Seitenprodukte erhalten - die Verwendung von Seitenabzugskolonnen ist daher zur Gewinnung von Reinstoffen ungeeignet.

Insbesondere zur Isolierung von mittelsiedenden Reinstoffen aus Vielstoffgemischen müssen somit in der Regel Kolonnenanordnungen, die aus mindestens zwei separaten Kolonnen bestehen, eingesetzt werden.

Eine vorteilhafte Alternative sind sogenannte Trennwandkolonnen. Der Einsatz von Trennwandkolonnen ermöglicht es, Seitenprodukte, also mittelsiedende Komponenten, ebenfalls in reiner Form aus Vielstoffgemischen zu isolieren. Bei Trennwandkolonnen ist im mittleren Bereich eine Trennwand angebracht. Diese erstreckt sich oberhalb und unterhalb der Zulaufstelle. Auf der anderen Seite, die sich gegenüber der Zulaufstelle befindet, ist mindestens eine Seitenabzugsstelle angeordnet, die sich auf gleicher Höhe, unterhalb oder oberhalb der Zulaufstelle befindet. Zwischen Seitenabzugsstelle und Zulaufstelle befindet sich die Trennwand. Diese ist senkrecht angeordnet. In dem Kolonnenbereich, der durch die Trennwand geteilt wird, ist eine Quervermischung von Flüssigkeits- und Brüdenströmen nicht möglich. Dadurch verringert sich bei der Auftrennung von Vielstoffgemischen die Zahl der insgesamt benötigten Destillationskolonnen. Eine Trennwandkolonne weist in der Regel folgende Segmente auf:

- Einen oberen Kolonnenbereich, der sich oberhalb der Trennwand befindet,
- einen Zulaufteil, der sich auf der Seite der Zulaufstelle befindet und seitlich durch die Trennwand abgegrenzt wird,
- einen Entnahmenteil, der sich auf der Seite der Seitenabzugsstelle befindet und seitlich durch die Trennwand abgegrenzt wird und
- einen unteren Kolonnenbereich, der sich unterhalb der Trennwand befindet

Der Verstärkungsteil des Zulaufteils ist der obere Bereich des Zulaufteils, welcher sich oberhalb der Zulaufstelle befindet, und der Abtriebsteil des Zulaufteils ist der untere Teil des Zulaufteils, der sich unterhalb der Zulaufstelle befindet. Der Entnahmeteil ist in einen oberen Teil, der sich oberhalb der Seitenabzugsstelle befindet und einen unteren Teil, der sich unterhalb der Seitenabzugsstelle befindet, unterteilt. Eine Trennwandkolonne ist im Prinzip eine apparative Vereinfachung von thermisch gekoppelten Destillationskolonnen, wobei jedoch letztere höhere Investionskosten aufweisen. Trennwandkolonnen und thermisch gekoppelte Kolonnen bieten gegenüber der Anordnung von konventionellen Destillationskolonnen sowohl hinsichtlich des Energiebedarfs als auch der Investitionskosten Vorteile und werden daher bevorzugt industriell eingesetzt. Trennwandkolonnen können sowohl als Füllkörper oder geordnete Packungen enthaltende Packungskolonnen oder als Bodenkolonnen ausgestaltet sein. Werden Packungskolonnen eingesetzt, so sind geordnete Gewebepackungen mit einer spezifischen Oberfläche von 300 bis 800 $m^2/m^3$, bevorzugt von 500 bis 750 $m^2/m^3$, besonders geeignet. Üblicherweise sind Trennwandkolonnen so ausgestaltet, daß die Trennwand senkrecht verläuft und die Querschnittsflächen des Entnahmeteils und des Zulaufteils gleich groß sind. Weitere Informationen über Trennwandkolonnen sind beispielsweise in der EP-A-0 122 367, in der EP-B-0 126 288 und in der EP-B-0 133 510 aufgeführt.

Die Aufgabe der vorliegenden Erfindung ist, eine Trennwandkolonne bereitzustellen, die insbesondere bei niedrigen Betriebsdrücken von ca. 0,5 bis 20 mbar kostengünstiger und mit besserer Trennleistung arbeitet als bisher bekannte Trennwandkolonnen. Dabei soll insbesondere darauf geachtet werden, daß die Segmente dieser Trennwandkolonne bei dem Destillationsverfahren optimal genutzt werden.

Die Lösung dieser Aufgabe ist dann eine Trennwandkolonne, die im mittleren Bereich durch eine Trennwand in ein Zulaufteil und einen Entnahmeteil aufgegliedert ist, aufweisend als Segmente

    a) einen oberen Kolonnenbereich,
    b) ein Verstärkungsteil des Zulaufteils,
    c) ein Abtriebsteil des Zulaufteils,
    d) ein oberen Teil des Entnahmeteils,
    e) ein unteren Teil des Entnahmeteils,
    f) einen Zwischenbereich des Zulaufteils,
    g) einen Zwischenbereich des Entnahmeteils und
    h) einen unteren Kolonnenbereich,

wobei die Trennwand zwischen den Segmenten b) und d) sowie zwischen den Segmenten c) und e) senkrecht angeordnet ist, die Segmente b), d), c) und e) trennwirksame Einbauten aufweisen und die Querschnittsfläche $A_b$ des Segmentes b) um mindestens 10 % kleiner ist als die Querschnittsfläche $A_d$ von Segment d), sowie die Querschnittsfläche $A_c$ des Segmentes c) um mindestens 10 % größer ist als die Querschnittsfläche $A_e$ von Segment e).

Segment f) befindet sich zwischen den Segmenten b) und c) und entsprechend Segment g) zwischen den Segmenten d) und e). Meist weisen die Segmente b) und d) die gleiche Anzahl und die gleichen Typen von trennwirksamen Einbauten auf. In der Regel enthalten die Segmente c) und e) die gleiche Anzahl und die gleichen Typen von trennwirksamen Einbauten. Der obere Kolonnenbereich und der untere Kolonnenbereich enthalten bevorzugt trennwirksame Einbauten - der Zwischenbereich weist jedoch meist keine trennwirksamen Einbauten auf.

Der Vorteil der erfindungsgemäßen Trennwandkolonne ist, daß insbesondere bei niedrigen Betriebsdrücken von ca. 0,5 bis 20 mbar die entsprechende destillative Trennung kostengünstiger und mit einer besseren Trennleistung ausführbar ist als vergleichsweise mit einer Trennwandkolonne nach dem Stand der Technik. Diese vorteilhaften Ergebnisse werden insbesondere bei solchen Anwendungsfällen erreicht, bei denen - bedingt durch das aufgegebene Vielstoffgemisch - die Belastung in den Segmenten b) und e) vergleichsweise niedrig und in den Segmenten c) und d) vergleichsweise hoch ist. Somit werden die Segmente entsprechend dem F-Faktor dimensioniert. Der F-Faktor ist ein Maß für die Belastung, die durch den Gasstrom in der Kolonne hervorgerufen wird - ein Maß für den Impuls dieses Gases (F-Faktor: Gasgeschwindigkeit in der Dimension m/s multipliziert mit der Wurzel der Gasdichte in der Dimension kg/m³). Bei einem höheren F-Faktor wird entsprechend in dem betreffenden Segment eine größere Querschnittsfläche bereitgestellt. Dies führt zu einer optimalen Belastung des entsprechenden Segmentes und somit zu einer besseren Trennleistung. Umgekehrt werden Segmente, die weniger stark belastet werden, kleiner dimensioniertsomit wird eine hinreichende Benetzung der enthaltenden trennwirksamen Einbauten mit einem Flüssigkeitsfilm gewährleistet; falls letztere Segmente größer dimensioniert wären, wären entsprechende trennwirksame Einbauten normalerweise nicht vollständig benetzt. Eine vollständige Benetzung der trennwirksamen Einbauten ist jedoch Voraussetzung für eine hohe Trennleistung. Die erfindungsgemäße Trennwandkolonne kann somit an die jeweilige Trennaufgabe optimal angepaßt werden - es werden keine Segmente eingebaut, welche für das entsprechende Trennproblem eine unnötig hohe Dimensionierung aufweisen, wodurch der apparative Aufwand verringert wird, und das entsprechende Trennverfahren kostengünstiger gestaltet werden kann.

Die Segmente können gegebenenfalls auch mit unterschiedlichen trennwirksamen Einbauten und Verteilungseinrichtungen für Flüssigkeit bestückt sein. Bei Anwendungen im Vakuumbereich können spezielle Verteiler vorgesehen werden, deren Auslegung und Dimensionierung im Rahmen der Festlegung der Querschnittsverhältnisse der Segmente erfolgt. Die Wahl der entsprechenden Querschnittsverhältnisse wird meist so vorgenommen, daß sich insbesondere bei niedrigen Betriebsdrücken von etwa 0,5 bis ca. 20 mbar bei Vorliegen von niedrigen Flüssigkeitsberieselungsdichten günstige Bedingungen für die Flüssigkeitsverteilung ergeben. Die Trenneinbauten in den Segmenten werden in der Regel so ausgewählt, daß sich minimale Investitionskosten dafür ergeben. Das bevorzugte Verhältnis der Querschnittsflächen hängt vom Aufteilungsverhältnis der Flüssigkeit am oberen Ende der Trennwand und von dem Betriebsdruck P ab. Unter dem Betriebsdruck soll der Kopfdruck der Trennwandkolonne verstanden werden. In der Regel ist die Querschnittsfläche $A_b$ des Segmentes b) um mindestens 40 %, bevorzugt um mindestens 60 %, kleiner als die Querschnittsfläche $A_d$ von Segment d). Außerdem ist meist die Querschnittsfläche $A_c$ des Segmentes c) um mindestens 40 %, bevorzugt um mindestens 60 %, größer als die Querschnittsfläche $A_e$ von Segment e).

In einer bevorzugten Ausführungsform der Erfindung beträgt der Betriebsdruck P zwischen 0,0005 und 10 bar und die berechneten Verhältnisse der Querschnittsflächen $A'_b / A'_d$ sowie $A'_c / A'_e$ ergeben sich aus folgenden Beziehungen:

$$\frac{A'_b}{A'_d} = \left(\frac{m_{s,b}}{m_{s,d}}\right) \times \left(\frac{m_{i,b}}{m_{i,d}}\right)^C$$

$$\frac{A'_c}{A'_e} = \left(\frac{m_{s,c}}{m_{s,e}}\right) \times \left(\frac{m_{i,c}}{m_{i,e}}\right)^C$$

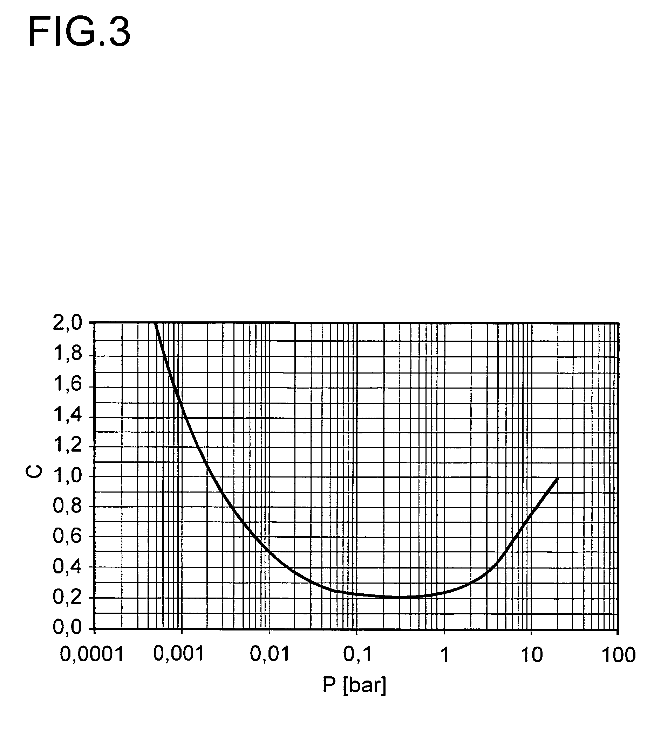

Dabei bedeuten $A'_b, A'_d, A'_c, A'_e$ die zur Berechnung vorgesehenen Querschnittsflächen der Segmente b,d,c,e ; $m_{s,b}, m_{s,d}, m_{s,c}, m_{s,e}$, die durch die Segmente b,d,c,e strömenden Gasvolumenströme, gemessen in m³/h, $m_{i,b}, m_{i,d}, m_{i,c}, m_{i,e}$ die durch die Segmente b,d,c,e strömenden Flüssigkeitsvolumenströme, gemessen in m³/h und der Exponent C ergibt sich als betriebsdruckabhängige Variable aus der in Figur 3 dargestellten, empirisch ermittelten Funktion. Dabei weichen die berechneten Verhältnisse $A'_b / A'_d$ sowie $A'_c / A'_e$ von den entsprechenden, tatsächlich vorliegenden Verhältnissen $A_b / A_d$ sowie $A_c / A_e$ um maximal 30%, bevorzugt um maximal 20%, ab. In der Trennwandkolonne können auch für geordnete Packungen entsprechend gewünschte Flächenverhältnisse realisiert werden, da die Fertigung der geordneten Packungselemente bei den Herstellerfirmen inzwischen üblicherweise computergesteuert erfolgt.

Bei der Auslegung der Trennwandkolonne sollte die Aufteilung der Trennstufen bevorzugt so vorgenommen werden, daß die Bauhöhe des Segments b) mit der des Segments e) und die Bauhöhe des Segmentes c) mit der des Segmentes d) möglichst gut übereinstimmt. Falls sich jedoch entsprechend ungleiche Bauhöhen der Trenneinbauten nicht umgehen lassen, werden in den Segmenten b) und e) oder in den Segmenten c) und d) Teilbereiche nicht mit Trenneinbauten versehen. Durch eine geeignete Wahl von Trenneinbauten verschiedener Trennleistung lassen sich solche Freiräume jedoch in der Praxis meist vermeiden.

Häufig beträgt der Betriebsdruck der Trennwandkolonne 0,0005 bis 0,02 bar und es werden Flüssigkeitsverteiler eingesetzt, bei denen die Flüssigkeitsverteilung nach dem Anstauprinzip und die nachgeschaltete Flüssigkeitsfeinverteilung nach dem Kapillarprinzip erfolgt. Die Zahl der Abtropfstellen beträgt vorzugsweise etwa 200/m$^2$ bis 1000/m$^2$. Bevorzugte Bauarten sind Kanalrinnenverteiler. Es eignen sich sowohl Kanalrinnenverteiler, bei denen die kapillare Flüssigkeitsverteilung kreisförmig, als auch solche, bei denen die kapillare Flüssigkeitsverteilung linear angeordnet ist. Den verschiedenen Bauarten ist jedoch gemeinsam, daß diese kleine Flüssigkeitsmengen in hoher Verteilgüte auf große Querschnittsflächen aufgeben können. Gemeinsam mit den optimierten Querschnittsverhältnissen der Segmente ergeben sich somit günstige Bauformen für Kolonnen, welche bei niedrigen Drücken von 0,5 bis 10 mbar arbeiten.

Häufig werden als trennwirksame Einbauten geordnete Packungen in Kreuzkanalstruktur eingesetzt. Dabei ist die oberste Packung unterhalb der Flüssigkeitsverteiler meist so ausgerichtet, daß die einzelnen Schichten parallel zur Trennwand ausgerichtet sind.

Bei der Konstruktion der Trennwandkolonne wird die Trennwand bevorzugt durch Einschweißen an die Kolonnenwand befestigt. Es ist jedoch auch prinzipiell möglich, dabei lösbare Verbindungen vorzusehen, oder die Trennwand, wie in der EP-A-0 804 951 beschrieben, lose zwischen den Packungen zu montieren. Das Stück der Trennwand, welches sich zwischen den Segmenten f) und g) befindet, wird in der Regel durch Einschweißen befestigt. Dabei ist die Trennwand zwischen den Segmenten f) und g) in der Regel schräg angeordnet, wobei diese meist gegen die Horizontale einen Winkel von 25 bis 75°, bevorzugt von 55 bis 65°, bildet. Bei dieser Anordnung werden Verwirbelungen des Gasstroms, welche die Trennleistung beeinträchtigen können, weitgehend vermieden.

In der Regel wird die Flüssigkeit auf den Zulaufteil mit Hilfe einer Pumpe gefördert oder über eine statische Zulaufhöhe von mindestens ca. 1m mengengeregelt aufgegeben. Die Regelung wird meist so eingestellt, daß die auf den Zulaufteil aufgegebene Flüssigkeitsmenge nicht unter 30% des "Normalwertes" (als Normalwert soll die Menge angesehen werden, die bei dem entsprechenden kontinuierlichen Verfahren im zeitlichen Mittel pro Zeiteinheit an einer bestimmten Stelle anfällt) sinken kann. Meist wird die Aufteilung der aus dem Segment d) im Entnahmeteil ablaufenden Flüssigkeit auf den Seitenabzug und auf das Segment e) im Entnahmeteil durch eine Regelung so eingestellt, daß die auf das Segment e) aufgegebene Flüssigkeitsmenge nicht unter 30% des "Normalwertes" sinken kann.

Zur Entnahme und Aufteilung der Flüssigkeit am oberen Ende der Trennwand und an der Seitenentnahmestelle eignen sich sowohl innenliegende, als auch außerhalb der Kolonne angeordnete Auffangräume für die Flüssigkeit, welche die Funktion einer Pumpenvorlage übernehmen. Bei Bodenkolonnen ist es besonders günstig, hierzu den Ablaufschacht auf etwa das 2- bis 3-fache der üblichen Höhe zu vergrößern und in dem Ablaufschacht die entsprechende Flüssigkeitsmenge zu speichern. Bei der Verwendung von gepackten Kolonnen wird die Flüssigkeit zunächst in Sammlern gefaßt und von dort aus in einen innenliegenden oder außenliegenden Auffangraum geleitet. Allgemein bieten Schwenktrichter eine kostengünstige Alternative. Im Fall von Bodenkolonnen und bei Vorliegen von höheren Drücken kann die Flüssigkeit auch vorteilhaft in einem Kaminboden angestaut werden.

In einer bevorzugten Ausführungsform der Erfindung enthält das eingeführte Zulaufgemisch als mittelsiedendes Wertprodukt 70 bis 95%, bevorzugt 75 bis 90% p-Methoxyzimtsäureethylhexylester.

Neben p-Methoxyzimtsäureethylhexylester enthält dieses Gemisch außerdem meist noch 1 bis 5% leichtersiedende Nebenprodukte und 5 bis 25% höhersiedende Nebenprodukte. Dann betragen die Trennstufenzahl der entsprechend eingesetzten Trennwandkolonne meist etwa 35 theoretische Trennstufen und die Verhältnisse der Querschnittsflächen $A_b / A_d$ in der Regel zwischen 1 : 1,6 und 1 : 2,4, bevorzugt 1 : 1,8 bis 1 : 2,2, sowie $A_c / A_e$ zwischen 1 : 1,6 und 1 : 2,4, bevorzugt zwischen 1 : 1,8 bis 1 : 2,2. Entsprechend wird dann die Trennwandkolonne bei einem Kopfdruck von 1 bis 10 mbar, bevorzugt bei 4 bis 6 mbar, betrieben.

Die vorliegende Erfindung betrifft auch ein Verfahren zur destillativen Reingewinnung von p-Methoxyzimtsäureethylhexylester unter Verwendung einer vorstehend beschriebenen Trennwandkolonne. Das erfindungsgemäße Verfahren ist dadurch gekennzeichnet, daß das eingeführte Zulaufgemisch (11, 12, 13) als mittelsiedendes Wertprodukt (12) 70 bis 95%, bevorzugt 75 bis 90%, p-Methoxyzimtsäureethylhexylester enthält.

Die anliegende Zeichnung zeigt

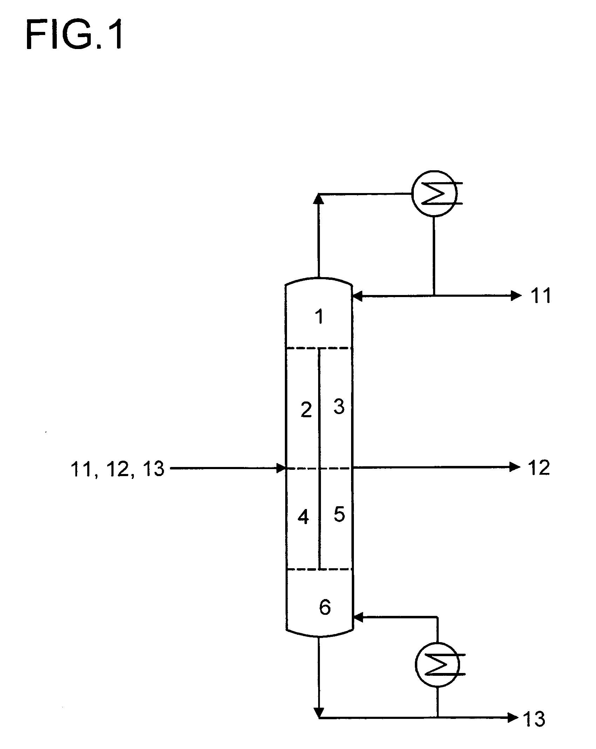

- in Fig. 1 ein Schema einer Trennwandkolonne nach dem Stand der Technik,
- in Fig. 2 ein Schema einer erfindungsgemäßen Trennwandkolonne und
- in Fig. 3 die Abhängigkeit des empirisch ermittelten Exponenten C von dem Betriebsdruck der Trennwandkolonne.

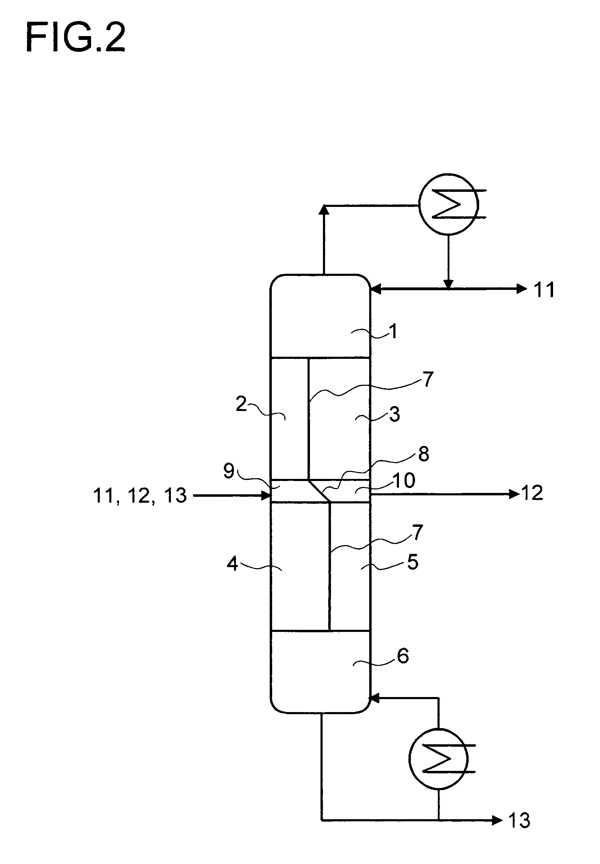

Fig. 2 zeigt die Auftrennung eines als Vielstoffgemisch vorliegenden Zulaufgemisches 11, 12, 13 in einer erfindungsgemäßen Trennwandkolonne in einen Leichtsieder 11, in ein mittelsiedendes Wertprodukt 12 und in einen Schwersieder 13. Die Trennwand 7, 8 ist in ihrem oberen und unteren Teil 7 senkrecht und in ihrem mittleren Teil 8 schräg angeordnet. Der obere Kolonnenbereich 1 befindet sich oberhalb der Trennwand 7, 8, und der untere Kolonnenbereich 6 ist unterhalb der Trennwand 7, 8 angeordnet. Der Zulauf mündet in Segment f) 9 und die Seitenabzugsstelle ist mit Segment g) 10 verbunden.

Im folgenden soll die Erfindung anhand eines Ausführungsbeispiels näher erläutert werden.

**Beispiel:**

Die als Versuchskolonne eingesetzte Trennwandkolonne wies einen Durchmesser von 0,2 Meter auf, war über eine Höhe von insgesamt 7 Metern mit Drahtgewebepackungen, die eine spezifische Oberfläche von 500 $m^3/m^2$ aufwies, bestückt und enthielt eine theoretische Trennstufenzahl von insgesamt 41 Stufen. Die Trennwand war zwischen der 8. und der 30. Stufe - von unten gezählt festgeschweißt. Die Zulaufstelle und die Entnahmestelle für den flüssigen Seitenabzug waren auf gleicher Höhe angeordnet. Eine Aufteilung der Flüssigkeit auf die Segmente b) 2 und d) 3 der Kolonne erfolgte im Mengenverhältnis 1 : 3. Das Flächenverhältnis der Segmente b) 2 und d) 3 der Kolonne betrug 1 : 2, das Flächenverhältnis der Segmente c) 4 und e) 5 der Kolonne betrug 2 : 1. Der mittlere Bereich 8 der Trennwand 7, 8 war schräg angeordnet und wies einen Winkel von 60° gegen die Horizontale auf. Der Kopfdruck betrug 5 mbar. Das Zulaufgemisch 11, 12, 13 wurde flüssig in einem Mengenstrom von 8,5 kg/h sowie bei einer Temperatur von ca. 170° in die Kolonne eingespeist. Letzteres enthielt 85% p-Methoxyzimtsäureethylhexylester, 5% leichtersiedende Nebenprodukte und 10% höhersiedende Nebenprodukte. Am Kopf der Kolonne wurden bei einem Rücklaufverhältnis von 12 ca. 0,5 kg/h leichtersiedende Nebenprodukte mit einem Restgehalt von 5% p-Methoxyzimtsäureethylhexylester entnommen. Das Sumpfprodukt, das vorwiegend höhersiedende Nebenprodukte enthielt, wurde in einem Mengenstrom von ca. 0,9 kg/h mit einem Gehalt von 5% p-Methoxyzimtsäureethylhexylester abgezogen. Das mittelsiedende Wertprodukt 12 p-Methoxyzimtsäureethylhexylester wurde in einem Mengenstrom von ca. 7,1 kg/h sowie einer Reinheit von > 99,5% an der Seitenentnahme flüssig entnommen.

Der vorstehende Versuch zeigt, daß sich bestimmte Vielstoffgemische effektiv auftrennen lassen - das mittelsiedende Wertprodukt ist in hoher Reinheit isolierbar. Mit der vorstehend beschriebenen erfindungsgemäßen Trennwandkolonne kann bei konstantem Mengenstrom des eingegebenen Zulaufgemischs das mittelsiedende Wertprodukt in einer höheren Reinheit gewonnen werden als vergleichsweise mit einer üblichen Trennwandkolonne nach dem Stand der Technik. Dies ist u.a. bedingt durch den vergleichsweise niedrigen Druckverlust der erfindungsgemäßen Trennwandkolonne. Der niedrige Druckverlust ermöglicht den Betrieb der Trennwandkolonne bei vergleichsweise niedrigen Sumpftemperaturen. Niedrige Sumpftemperaturen bedeuten neben der Energieerspamis außerdem eine reduzierte Bildung von Nebenprodukten, die in den Seitenabzug gelangen können. Eine Trennwandkolonne nach dem Stand der Technik, welche die gleiche Trennleistung erreicht, müßte entsprechend größer ausgelegt werden und würde für ihren Betrieb einen höheren Energieaufwand benötigen.

**Patentansprüche**

1. Trennwandkolonne, die im mittleren Bereich durch eine Trennwand (7, 8) in einen Zulaufteil und einen Entnahmeteil aufgegliedert ist, aufweisend als Segmente,

   a) einen oberen Kolonnenbereich (1),
   b) einen Verstärkungsteil (2) des Zulaufteils,
   c) einen Abtriebsteil (4) des Zulaufteils,
   d) ein oberen Teil (3) des Entnahmeteils,
   e) ein unteren Teil (5) des Entnahmeteils,
   f) einen Zwischenbereich (9) des Zulaufteils,
   g) einen Zwischenbereich (10) des Entnahmeteils und
   h) einen unteren Kolonnenbereich (6),

   wobei die Trennwand (7) zwischen den Segmenten b) (2) und d) (3) sowie zwischen den Segmenten c) (4) und e) (5) senkrecht angeordnet ist, die Segmente b) (2), d) (3), c) (4) und e) (5) trennwirksame Einbauten aufweisen und die Querschnittsfläche $A_b$ des Segmentes b) (2) um mindestens 10% kleiner ist als die Querschittsfläche $A_d$ von Segment d) (3), sowie die Querschnittsfläche $A_c$ des Segmentes c) (4) um mindestens 10% größer ist als die Querschnittsfläche $A_e$ von Segment e) (5).

2. Trennwandkolonne nach Anspruch 1, **dadurch gekennzeichnet, daß** die Querschnittsfläche $A_b$ des Segments b) (2) um mindestens 40%, bevorzugt um mindestens 60%, kleiner ist, als die Querschnittsfläche $A_d$ von Segement d) (3).

3. Trennwandkolonne nach Anspruch 1 oder 2, **dadurch gekennzeichnet, daß** die Querschnittsfläche $A_c$ des Segmentes c) (4) um mindestens 40%, bevorzugt um mindestens 60%, größer ist als die Querschnittsfläche von Segment e) (5).

4. Trennwandkolonne nach einem der Ansprüche 1 bis 3, **dadurch gekennzeichnet, daß** die Trennwand (8) zwischen den Segmenten f) (9) und g) (10) schräg angeordnet ist und gegen die Horizontale einen Winkel von 25 bis 75°, bevorzugt von 55 bis 65°, bildet.

5. Trennwandkolonne nach einem der Ansprüche 1 bis 4, **dadurch gekennzeichnet, daß** der Betriebsdruck P zwischen 0,0005 und 10 bar beträgt und die berechneten Verhältnisse der Querschnittsflächen $A'_b / A'_d$ sowie $A'_c / A'_e$ sich aus folgenden Beziehungen ergeben

$$\frac{A'_b}{A'_d} = \left( \frac{m_{s,b}}{m_{s,d}} \right) \times \left( \frac{m_{i,b}}{m_{i,d}} \right)^C$$

$$\frac{A'_c}{A'_e} = \left( \frac{m_{s,c}}{m_{s,e}} \right) \times \left( \frac{m_{i,c}}{m_{i,e}} \right)^C$$

und $A'_b$, $A'_d$, $A'_c$, $A'_e$ die zur Berechnung vorgesehenen Querschnittsflächen der Segmente b,d,c,e; $m_{s,b}$, $m_{s,d}$, $m_{s,c}$, $m_{s,e}$ die durch die Segmente b,d,c, e strömenden Gasvolumenströme, gemessen in $m^3/h$; $m_{i,b}$, $m_{i,d}$, $m_{i,c}$, $m_{i,e}$ die durch die Segmente b, d,c,e strömenden Flüssigkeitsvolumenströme, gemessen in $m^3/h$, bedeuten und der Exponent C sich als betriebsdruckabhängige Variable aus der in Fig. 3 dargestellten, empirisch ermittelten Funktion ergibt, wobei die berechneten Verhältnisse $A'_b / A'_d$ sowie $A'_c / A'_e$ von den entsprechenden, tatsächlich vorliegenden Verhältnisse $A_b / A_d$ sowie $A_c / A_e$ um maximal 30%, bevorzugt um maximal 20%, abweichen.

6. Trennwandkolonne nach einem der Ansprüche 1 bis 5, **dadurch gekennzeichnet, daß** der Betriebsdruck 0,0005 bis 0,02 bar beträgt, Flüssigkeitsverteiler eingesetzt werden, bei denen die Flüssigkeitsvorverteilung nach dem Anstauprinzip und die nachgeschaltete Flüssigkeitsfeinverteilung nach dem Kapillarprinzip, erfolgt.

7. Trennwandkolonne nach einem der Ansprüche 1 bis 6, **dadurch gekennzeichnet, daß** als trennwirksame Einbauten geordnete Packungen in Kreuzkanalstruktur eingesetzt werden.

8. Trennwandkolonne nach Anspruch 7, **dadurch gekennzeichnet, daß** die oberste Packungslage unterhalb der Flüssigkeitsverteiler so ausgerichtet ist, daß die einzelnen Schichten parallel zur Trennwand (7, 8) ausgerichtet sind.

9. Verfahren zur destillativen Reingewinnung von p-Methoxyzimtsäureethylhexylester unter Verwendung einer Trennwandkolonne gemäß einem der Ansprüche 1 bis 8, **dadurch gekennzeichnet, daß** das eingeführte Zulaufgemisch (11, 12, 13) als mittelsiedendes Wertprodukt (12) 70 bis 95%, bevorzugt 75 bis 90%, p-Methoxyzimtsäureethylhexylester enthält.

## Claims

1. A dividing wall column divided in the middle region into a feed section and an offtake section by a dividing wall (7, 8) and having as segments

   a) an upper column region (1),
   b) an enrichment section (2) of the feed section,
   c) a stripping section (4) of the feed section,
   d) an upper part (3) of the offtake section,
   e) a lower part (5) of the offtake section,
   f) an intermediate region (9) of the feed section,
   g) an intermediate region (10) of the offtake section and
   h) a lower column region (6),

   where the dividing wall (7) is located vertically between the segments b) (2) and d) (3) and between the segments c) (4) and e) (5), the segments b) (2), d) (3), c) (4) and e) (5) have separation-active internals and the cross-sectional area $A_b$ of the segment b) (2) is at least 10% smaller than the cross-sectional area $A_d$ of segment d) (3), and the cross-sectional area $A_c$ of the segment c) (4) is at least 10% greater than the cross-sectional area $A_e$ of segment e) (5).

2. The dividing wall column according to claim 1, wherein the cross-sectional area $A_b$ of the segment b) (2) is at least 40%, preferably at least 60%, smaller than the cross-sectional area $A_d$ of segment d) (3).

3. The dividing wall column according to claim 1 or 2, wherein the cross-sectional area $A_c$ of the segment c) (4) is at least 40%, preferably at least 60%, greater than the cross-sectional area of segment e) (5).

4. The dividing wall column according to any of claims 1 to 3, wherein the dividing wall (8) is arranged obliquely between the segments f) (9) and g) (10) and forms an angle of from 25 to 75°, preferably from 55 to 65°, to the horizontal.

5. The dividing wall column according to any of claims 1 to 4, wherein the operating pressure P is in the range from 0.0005 to 10 bar and the calculated ratios of the cross-sectional areas $A'_b/A'_d$ and $A'_c/A'_e$ are given by the following relationships

$$\frac{A'_b}{A'_d} = \left(\frac{m_{s,b}}{m_{s,d}}\right) \times \left(\frac{m_{i,b}}{m_{i,d}}\right)^C$$

$$\frac{A'_c}{A'_e} = \left(\frac{m_{s,c}}{m_{s,e}}\right) \times \left(\frac{m_{i,c}}{m_{i,e}}\right)^C$$

where $A'_b$, $A'_d$, $A'_c$, $A'_e$ are the cross-sectional areas of the segments b,d,c,e provided for the calculation; $m_{s,b}$, $m_{s,d}$, $m_{s,c}$, $m_{s,e}$ are the volume flows of gas through the segments b,d,c,e, measured in $m^3/h$; $m_{i,b}$, $m_{i,d}$, $m_{i,c}$, $m_{i,e}$ are the volume flows of liquid through the segments b,d,c,e, measured in $m^3/h$, and the exponent C is obtained as operating-pressure-dependent variable from the empirically determined function shown in Fig. 3, and the calculated ratios $A'_b/A'_d$ and $A'_c/A'_e$ deviate from the corresponding, actual ratios $A_b/A_d$ and $A_c/A_e$ by not more than 30%, preferably not more than 20%.

6. The dividing wall column according to any of claims 1 to 5, wherein the operating pressure is from 0.0005 to 0.02 bar and liquid distributors in which the liquid predistribution occurs by the bank-up principle and the downstream fine liquid distribution occurs by the capillary principle are used.

7. The dividing wall column according to any of claims 1 to 6, wherein ordered packing having a cross-channel structure is used as separation-active internals.

8. The dividing wall column according to claim 7, wherein the uppermost layer of packing below the liquid distributor is aligned so that the individual layers are aligned parallel to the dividing wall (7, 8).

9. A process for isolating pure ethylhexyl p-methoxycinnamate by distillation using a dividing wall column according to any of claims 1 to 8, wherein the feed mixture (11, 12, 13) introduced comprises from 70 to 95%, preferably from 75 to 90%, of ethylhexyl p-methoxycinnamate as intermediate-boiling desired product (12).

**Revendications**

1. Colonne à paroi de séparation, divisée dans le secteur médian par une paroi de séparation (7, 8) en une section d'alimentation et une section de prélèvement, comportant en tant que segments,

a) un secteur supérieur (1) de colonne,
b) une section de renforcement (2) de la section d'alimentation,
c) une section de distillation (4) de la section d'alimentation,
d) une section supérieure (3) de la section de prélèvement,
e) une section inférieure (5) de la section de prélèvement,
f) un secteur intermédiaire (9) de la section d'alimentation,
g) un secteur intermédiaire (10) de la section de prélèvement et
h) un secteur inférieur (6) de colonne,

dans laquelle la paroi de séparation (7) est disposée verticalement entre les segments b) (2) et d) (3) ainsi qu'entre les segments c) (4) et e) (5), les segments b) (2), d) (3), c) (4) et e) (5) comportent des garnissages à action séparatrice et la surface transversale $A_b$ du segment b) (2) est au moins 10 % plus petite que la surface transversale $A_d$ du segment d) (3), et la surface transversale $A_c$ du segment c) (4) est au moins 10 % plus grande que la surface transversale $A_e$ du segment e) (5).

2. Colonne à paroi de séparation selon la revendication 1, **caractérisée en ce que** la surface transversale $A_b$ du segment b) (2) est au moins 40 %, de manière préférée au moins 60 %, plus petite que la surface transversale $A_d$ du segment d) (3).

3. Colonne à paroi de séparation selon la revendication 1 ou 2, **caractérisée en ce que** la surface transversale $A_c$ du segment c) (4) est au moins 40 %, de manière préférée au moins 60 %, plus grande que la surface transversale du segment e) (5).

4. Colonne à paroi de séparation selon l'une quelconque des revendications, 1 à 3, **caractérisée en ce que** la paroi de séparation (8) est disposée de manière oblique entre les segments f) (9) et g) (10) et forme par rapport à l'horizontale un angle de 25 à 75°, de manière préférée de 55 à 65°.

5. Colonne à paroi de séparation selon l'une quelconque des revendications 1 à 4, **caractérisée en ce que** la pression de service P se situe entre 0,0005 et 10 bars et les proportions calculées des surfaces transversales $A'_b/A'_d$ ainsi que $A'_c/A'_e$ sont données par les correspondances suivantes /

$$\frac{A'_b}{A'_d} = \left(\frac{m_{s,b}}{m_{s,d}}\right) \times \left(\frac{m_{i,b}}{m_{i,d}}\right)^C$$

$$\frac{A'_c}{A'_e} = \left(\frac{m_{s,c}}{m_{s,e}}\right) \times \left(\frac{m_{i,c}}{m_{i,e}}\right)^C$$

et $A'_b$, $A'_d$, $A'_c$, $A'_e$ représentent les surfaces transversales des segments b, d, c, e prévues pour le calcul ; $m_{s,b}$, $m_{s,d}$, $m_{s,c}$, $m_{s,e}$ représentent les débits volumétriques de gaz circulant dans les segments b, d, c, e, mesurés en $m^3/h$ ; $m_{i,b}$, $m_{i,d}$, $m_{i,c}$, $m_{i,e}$ représentent les débits volumétriques de liquide circulant dans les segments b, d, c, e, mesurés en $m^3/h$, et l'exposant C en tant que variable dépendant de la pression de service est donné par la fonction déterminée empiriquement et représentée sur la figure 3, les proportions calculées $A'_b/A'_d$ et $A'_c/A'_e$ s'écartant des proportions $A_b/A_d$ et $A_c/A_e$ correspondantes, effectivement présentes d'au plus 30 %, de manière préférée d'au plus 20 %.

6. Colonne à paroi de séparation selon l'une quelconque des revendications 1 à 5, **caractérisée en ce que** la pression de service est de 0,0005 à 0,02 bar et des distributeurs de liquide sont utilisés, avec lesquels la prédistribution de liquide a lieu selon le principe de l'endiguement et la distribution fine de liquide placée à la suite a lieu selon le principe capillaire.

7. Colonne à paroi de séparation selon l'une quelconque des revendications 1 à 6, **caractérisée en ce que** des conditionnements disposés en tant que garnissages à action séparatrice sont utilisés dans une structure de canal en croix.

8. Colonne à paroi de séparation selon la revendication 7, **caractérisée en ce que** la plus haute couche de conditionnement est orientée en dessous des distributeurs de liquide de telle manière que les couches individuelles sont orientées parallèlement à la paroi de séparation (7, 8).

9. Procédé pour la préparation à l'état pur d'éthylhexylester d'acide p-méthoxycinnamique par distillation en utilisant une colonne à paroi de séparation selon l'une quelconque des revendications 1 à 8, **caractérisé en ce que** le mélange d'alimentation (11, 12, 13) introduit contient en tant que produit de valeur (12) à point d'ébullition moyen 70 à 95 %, de manière préférée 75 à 90 %, d'éthylhexylester d'acide p-méthoxycinnamique.

# FIG.1

# FIG.2

# FIG.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0122367 A
- EP 0126288 B
- EP 0133510 B
- EP 0804951 A